# EUROPEAN PATENT APPLICATION

(11) **EP 2 722 369 A1**
(43) Date of publication of application: **23.04.2014**
(21) Application number: 12007181.6
(22) Date of filing: 17.10.2012
(51) Int. Cl.: C09C 1/30

(54) **Hybrid nanoantioxidant materials**

(71) Applicant: ETH Zurich, 8092 Zurich (CH)
(72) Inventor: Pratsinis, Sotiris E., 8032 Zürich (CH); Deligiannakis, Ioannis, 45332 Ioannina (GR); Sotiriou, Georgios, 8057 Zürich (CH)

(57) **Abstract**

The invention provides coated or functionalized or surface modified nanoparticles having a coating of gallic acid and a silica core, preferably where said core and said coating is covalently bond by a linker. Further the invention provides articles comprising such nanoparticles; to methods of manufacturing such nanoparticles and to uses of such nanoparticles.

## Description

The present invention relates to coated or functionalized or surface modified nanoparticles, comprising a silica core and a coating of gallic acid; to articles comprising such nanoparticles; to methods of manufacturing such nanoparticles and coatings and to uses of such nanoparticles and coatings.

It is well known to use gallic acid and derivatives thereof (such as E310, E311 and E312) as antioxidant. However, due to polymerisation reactions, gallic acid is not stable. As a consequence thereof, rapid deactivation occurs under physiological conditions. As a further consequence of this polymerisation, a brownish colour occurs on products containing gallic acid.

Various attempts are known to stabilize gallic acid. Stathi et al (Chemical Physics Letters 2009, 472, 85-89) discloses the stabilisation of gallic acid on silica gels when covalently bond. Gels are considered continuous media with limited surface availability and stability. Although a stabilizing effect of gallic acid is reported, such gels are by itself of low stability, therefore difficult to handle and thus less beneficial. Giannakopoulos et al. (Langmuir 2006, 22, 6863-6873) discloses the stabilisation of gallic acid on specific clay types when adsorbed. Obviously, the use of such natural materials is disadvantageous.

In consequence, there is a need for providing gallic acid in a stabilized form and / or for providing improved methods to stabilize gallic acid.

These objectives are achieved by the nanoparticles as defined in claim 1 and the manufacturing method as defined in claim 12. Further aspects of the invention are disclosed in the specification and independent claims, preferred embodiments are disclosed in the specification and the dependent claims.

The present invention will be described in more detail below. It is understood that the various embodiments, preferences and ranges as provided / disclosed in this specification may be combined at will. Further, depending of the specific embodiment, selected definitions, embodiments or ranges may not apply.

Unless otherwise stated, the following definitions shall apply in this specification:

As used herein, the term "a," "an," "the" and similar terms used in the context of the present invention are to be construed to cover both the singular and plural unless otherwise indicated herein or clearly contradicted by the context.

As used herein, the terms "including", "containing" and "comprising" are used herein in their open, non-limiting sense. The term "containing" shall include the meaning of "comprising", "essentially consisting of" and "consisting of".

The term "antioxidant" is known in the field and relates to chemical entities that prevent or delay the development of deterioration due to oxidation. Preferred antioxidiants are selected from the group of trihydroxy phenolic acids its salts and derivatives; particularly gallic acid, its salts and derivatives.

The term "nanoparticle" is known in the field and includes crystalline or amorphous materials. Nanoparticles are particles having a diameter in the submicron size range and thus differ from particles (having larger sizes) and gels (having no particulate structure). Such particles may be characterized by its particle size and / or by its specific surface area (SSA) . A wide range of particle sizes are suitable, depending on the intended use. Primary particle sizes are preferably between 1 - 100 nm. Suitable methods for the determination of primary particle size can be found by Hyeon-Lee et al. Langmuir, 14, 5751 (1998).). Typically, the SSA is in the range of 50 - 1000 m²/g preferably 80 - 500 m²/g. The SSA may be determined by nitrogen adsorption using the BET method (according to: Janssen et al, Journal of Applied Polymer Science 52, 1913, 1994). It is generally accepted that nanoparticles tend to form aggregates or agglomerates; typically within a size of 10 nm - 10 µm. Nanoparticles may be obtained from a range of preparation methods, including high temperature-gas phase processes (such as flame synthesis, laser processes and plasma processes), and liquid phase chemical methods (such as precipitation and sol-gel processes) .

The present invention will be better understood by reference to the **figures.**

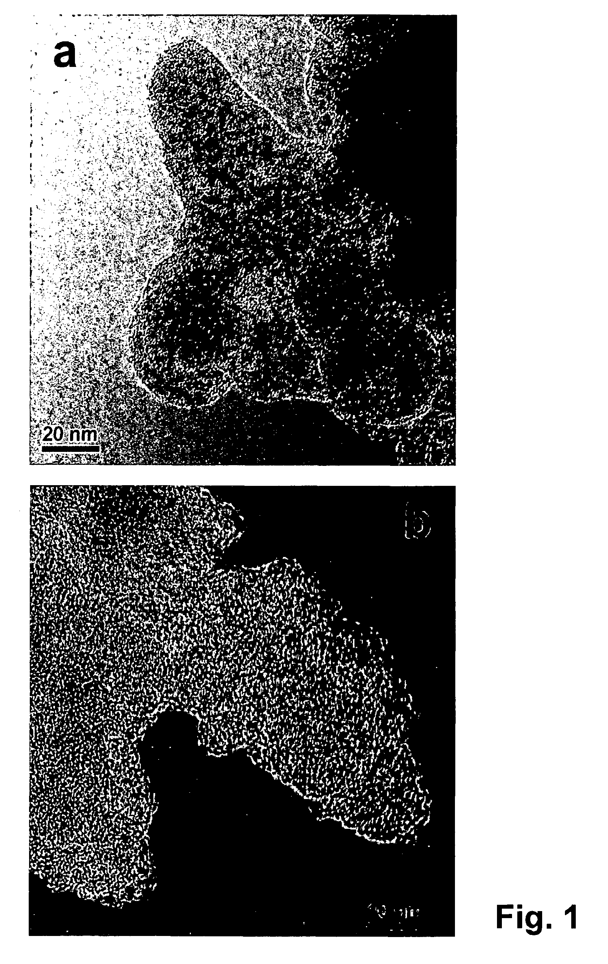

Fig. 1 shows High Resolution-TEM image of the SiO2 [90] sample, before (a) and after (b) the GA surface functionalisation as described in the example.

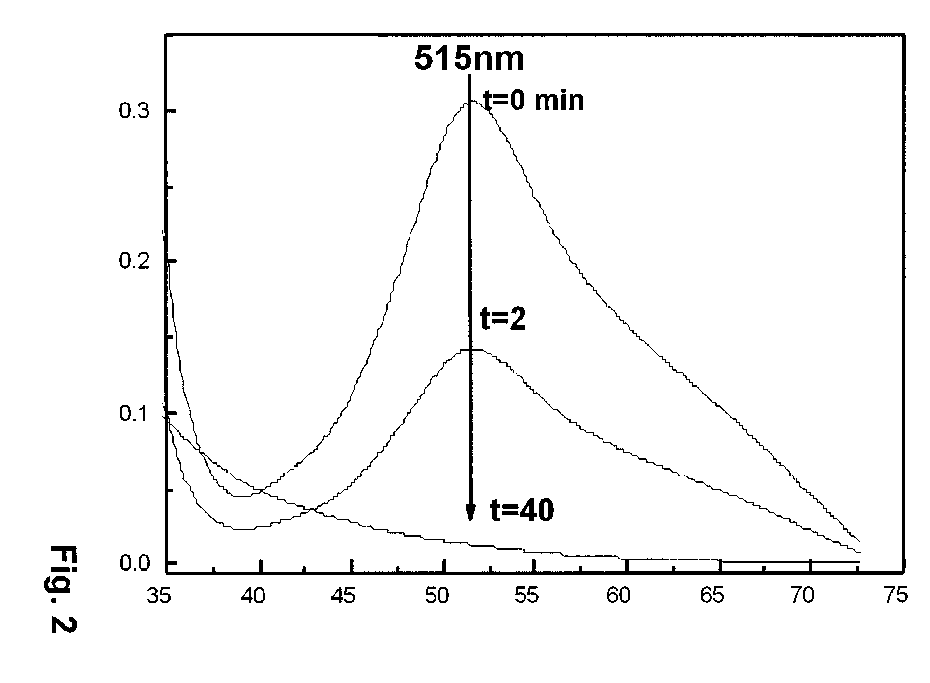

Fig. 2 shows the antioxidant activity of coated SiO2 nanoparticles according to the invention by the time-decay of UV-vis absorption spectrum of DPPH-radical (y-axis absorbance, x-axis wavelength; with a maximum at 514nm) .

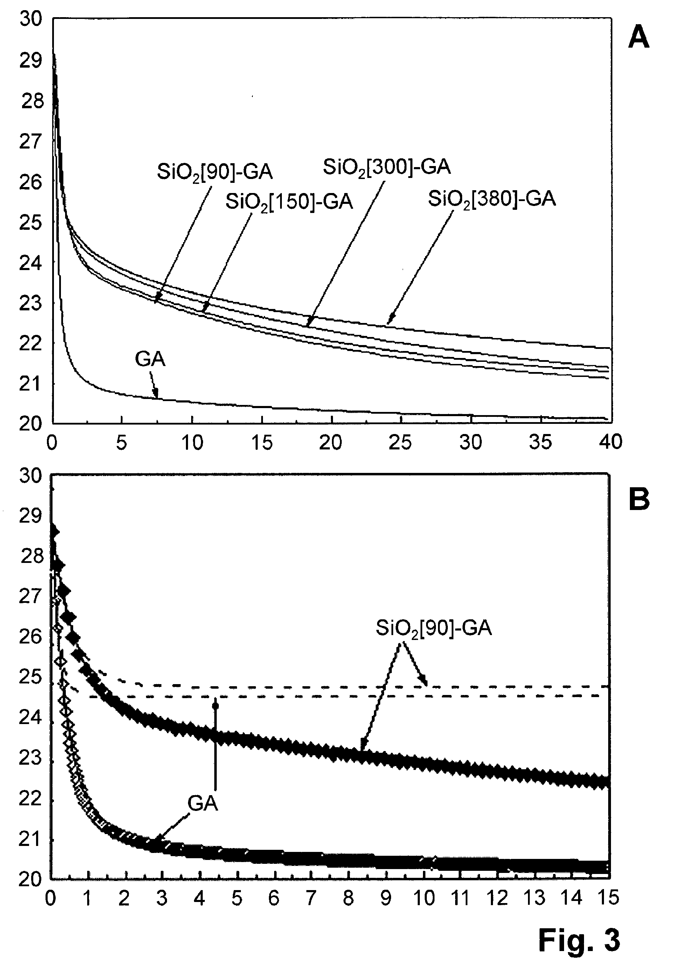

Fig. 3[A] shows the kinetics of decay of absorbance at 515nm for DPPH radicals ([DPPH]0 = 29.0±0.1µM) reacting with Si02-GA NPs. In Fig. 3[B] the experimental data shown by [◊] for pure GA, and by [◆] for SiO2-GA are zoomed at the intitial 0-15 minutes, for better viewing the initial phases. In Fig. 3[B], the solid lines are theoretical fits to the experimental data. [dashed lines] theoretical fast exponential components for the DPPH:SiO2-GA and DPPH:GA. (y-axis DPPH radicals remaining ([µm]; x-axis: reaction time [min])

In more general terms, in a **first aspect,** the invention relates to nanoparticles containing a core and a coating, wherein said coating comprises gallic acid said. In an advantageous embodiment, the core comprises silica. In an advantageous embodiment, the gallic acid is covalently bonded to said core. It was found that such nanoparticles show a number of beneficial properties. First, they are very active (i.e. having a high radical scavenging capacity RSC) and are long-lasting. Further, the inventive nanoparticles are thermally stable, reusable and available at low-costs. By these features, the above identified known problem, gallic acid's low stability, is overcome.

This aspect of the invention, particularly details of the nanoparticles as well as advantageous properties thereof, shall be explained in further detail below. As outlined herein, these nanoparticles may be considered as hybrid nanoantioxidant materials.

Nanoparticles: The term nanoparticle is defined above. Nanoparticles particularly suitable in the context of the present invention may be obtained by a flame spray synthesis (FSP) process.

Core: The core of the inventive nanoparticles contains, preferably consists of, (a) pure silica; or (b) silica doped with a dopant, said dopant preferably being selected from the group consisting of alumimium (Al) (c) an inner core of a material different from silica and an outer core of pure or doped silica.

It is known that silica nanoparticles contain on its surface hydroxyl groups which are susceptible to chemical reaction, this is described e.g. in Mueller et al. (Langmuir 2003, 19, 160-165). Accordingly, the invention provides nanoparticles wherein the core's surface contains, preferably consists of, silica' having reactive hydroxyl groups.

The size of the core may vary over a broad range, but typically is in the range of 5-100nm, preferably in the range of 10-50nm

Gallic Acid: The term includes the free compound of formula (I) 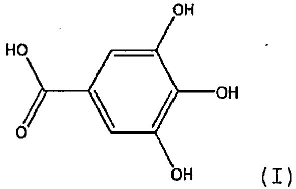 its hydrates, salts and / or its derivatives.

Covalent bonding: In an advantageous embodiment, the present invention provides nanoparticles having a silica core that has been covalently functionalized with gallic acid; these nanoparticles may also be referred to as "hybrid nanomaterial". Accordingly, the silica nanoparticles are a solid substrate where gallic acid is covalently attached ("grafted"). Accordingly, the inventive nanoparticles may be coated nanoparticles, or functionalized nanoparticles or surface modified nanoparticles. It was surprisingly found that such covalently bound gallic acid maintains its structural integrity, its activity, is long lasting and shows no leakage.

Coupling agent / linker: The covalent bonding between gallic acid and core may be accomplished by using a coupling agent of general formula (II). 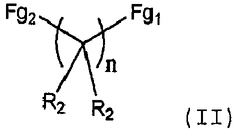 wherein R₂ represents hydrogen or C₁-C₄ alkyl, preferably hydrogen;
n represents an integer from 0-10, preferably 1-4, much preferred 3;
Fg₁ represents a functional group capable in reacting with a carboxy group, particularly -NH₂, -OH, halogen, preferably -NH₂;
Fg₂ represents a functional group capable in reacting with an inorganic hydroxy group, particularly a trialkoxysilyl group, such as trimethoxysilyl or triethoxysilyl.

Upon the reaction of the coupling agent (II), its structure will be modified due to the reaction of the functional groups. The structure obtained after covalent bonding is named "linker".

In a preferred embodiment, the core is partly or fully coated with compounds of formula (Ia) 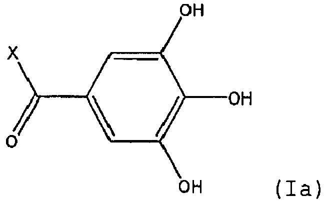 wherein X refers to a fragment that allows covalent bonding between gallic acid and the surface of the nanoparticle. Thus, the invention provides nanoparticles wherein said coating comprises gallic acid which is covalently bond to said core via its carboxylic group by a linker.

In a preferred embodiment, X represents a group 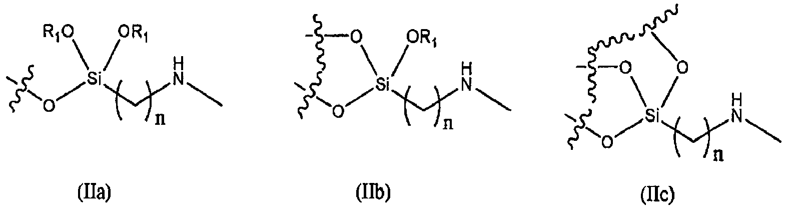 wherein
R¹ represents hydrogen or C₁-C₄ alkyl, preferably C₁-C₄ alkyl, much preferred ethyl;
n represents an integer from 0-10, preferably 1-4, much preferred 3;
the sinuous line represents the nanoparticles core.
In this embodiment, gallic acid is covalently bond to the core by an amide (peptide) bond.

A preferred coupling agent is thus APTES.

The amount of gallic acid may vary over a broad range and depends on the intended use. Typically, the amount of gallic acid is in the range of 0.1-4 molecules / nm², preferably 1 molecule / nm² or more.

In a **second aspect,** the invention relates to an article, comprising nanoparticles a described herein. The inventive nanoparticles comprise the components silica and gallic acid; both being approved for pharmaceutical applications, cosmetic applications and food additives. Consequently, the inventive nanoparticles may be applied / used in any article belonging to one of these groups; particularly where anti-oxidative properties are important. This aspect of the invention shall be explained in further detail below.

The article may be a final product, intended for the end-user or an interim product, not intended for the end-user.

In one embodiment, the inventive nanoparticles may be coated on top of said article. In this embodiment, the article simultaneously acts as a support. Accordingly, the invention provides a coating containing nanoparticles as described herein or, respectively, an article coated with the nanoparticles as described herein. This embodiment may find application in packaging industry, where a foil or container shows antioxidative properties.

In a further embodiment, the inventive nanoparticles may be embedded within said article. In this embodiment, the article simultaneously acts as a matrix. This embodiment may find application in cosmetic products, where a cosmetic product, such as a cream, shows antioxidative properties.

Further, the article may be intended for consumption (a consumable material) or not (a shaped article).

Consumables: This term includes pharmaceutical products, cosmetic products, food products and products for purification.

In one embodiment, the invention thus provides a pharmaceutical product (i.e. a formulation for human health, animal health, or plant protection) containing one or more active ingredients and nanoparticles as described herein.

In a further embodiment, the invention provides a cosmetic product containing nanoparticles as described herein. Such cosmetic products include creams (like toothpaste, sunscreen), liquid products (like mouthwash, shampoo) or solid products (like lipstick, powders).

In a further embodiment, the invention provides a food product (for human or for livestock) containing nanoparticles as described herein. Such food products include liquid products (like drinks, pre-concentrates of drinks) or solid products (like cereals, like effervescent tabs) and semi-solids (like yoghurt, puddings).

In a further embodiment, the invention provides a product for purification of the environment, particularly water-purification and/or air-purification.

In a further embodiment, the invention thus provides a shaped article containing nanoparticles as described herein. In this embodiment, the invention provides a composite material containing a matrix material - typically a polymer - and nanoparticles as described herein wherein said nanoparticles are dispersed in said matrix. The inventive nanoparticles may be dispersed (i) homogeneously within the matrix or (ii) predominantly (i.e. >50%, preferably >90%) on the surface of the matrix.

Such composite material ("composite") described above is a low-cost, highly active antioxidative composite and may be used in a number of applications such as polymeric commodity products (like in packaging applications) or for the coating of large areas. In general, the composite is considered useful, where oxidation is undesired. It was found by the present inventors that the composites as described herein provide a highly efficient and long-lasting antioxidative effect.

The inventive composite material typically comprises a polymer. The polymer acts as a matrix in which the nanoparticles are dispersed or embedded; preferably in an amount of 0.02-50 %(w/w), more preferably 5-30 %(w/w), most preferably 10-20 %(w/w). In general, all polymers known or obtainable according to known methods are suitable for manufacturing such composites. The term polymer shall thus also embrace polymer blends and reinforced polymers.

In an advantageous embodiment of the invention, the polymer is selected form the group consisting of silicones, polyethylene, polypropylene, polystyrene, polycarbonates, polyetheretherketones, poly(vinyl chloride), poly(ethylene terephtalate), polyamides, polytetrafluoroethylene, poly(vinyl acetate), polyesters, polyurethanes, styrene-block copolymers, polymethyl methacrylate, polyacrylates, acrylic-butadiene-styrene copolymers, natural and synthetic rubber, acrylonitrile rubber, and mixtures or copolymers thereof.

In a further advantageous embodiment of the invention, the polymer is a biodegradable polymer, preferably selected from the group consisting of polylactide or poly(lactic acid co glycolic acid), polyurethanes and starch based polymers.

In an advantageous embodiment, the shaped article is fibrous material, particularly a woven material or a nonwoven material.

In an advantageous embodiment, the shaped article is a foil.

In an advantageous embodiment, the shaped article is a packaging material.

In a **third aspect,** the invention relates to a method of manufacturing nanoparticles as described herein.

This aspect of the invention shall be explained in further detail below.

The starting materials for this manufacturing method, gallic acid, coupling agent, silica nanoparticles, are commercial articles or obtainable according to known methods. Further, the chemical reactions itself are known per se, although not yet applied to obtain the specific nanoparticles of the present invention. These chemical reactions are considered "mild" as they do not involve harsh reaction conditions.

In one embodiment (method A), the invention provides a method for manufacturing nanoparticles as defined herein, comprising the steps of (i) providing silica nanoparticles; (ii) modifying said silica nanoparticles and (iii) coupling gallic acid with said modified nanoparticles. In this embodiment, modified silica nanoparticles are coupled to gallic acid.

Step i: Suitable silica nanoparticles, including doped silica nanoparticles and core-shell silica nanoparticles, are commercially available or may be obtained from known methods. Such methods include dry manufacturing methods (e.g. pyrolytic methods) as well as wet manufacturing methods (e.g. sol gel processes). Advantageously, the silica nanoparticles are dried at 120 - 160°C, 6-24 hrs, such as 140°C, 12 hrs.

Step ii: Silica particles and coupling agent (II) are reacted in an organic solvent, such as an aromatic solvent, e.g. toluene. Reaction temperatures may vary and are generally from room temperature to reflux. Reaction times may also vary and are generally from 1 - 48 hrs. The thus obtained modified silica nanoparticles are optionally washed and / or dried, preferably are washed and dried.

Step iii: Modified silica particles of step ii), gallic acid and optionally activating agents, such as EDC, are combined in an organic solvent, such as an aromatic solvent, e.g. toluene. Reaction temperatures may vary and are generally from room temperature to reflux. Reaction times may also vary and are generally from 1 - 48 hrs. The thus obtained modified silica nanoparticles are optionally washed and / or dried, preferably are washed and dried. In an advantageous embodiment, step iii) is performed under water - free condition, to avoid formation of stable GA radicals on the nanoparticles obained.

In a further embodiment (method B), the invention provides a method for manufacturing nanoparticles as defined herein, comprising the steps of (i) providing gallic acid; (ii) modifying said gallic acid (iii) coupling said modified gallic acid with silica nanoparticles. In this embodiment, modified gallic acid is coupled to silica nanoparticles.

Step i: Suitable gallic acids or derivatives thereof, are commercially available or may be obtained from known methods. Such methods include organic synthesis or enzymatic manufacturing methods (e.g. from glucose)

Step ii: Gallic acid and coupling agent, e.g. EDC, are reacted in an organic solvent, such as an aromatic solvent, e.g. toluene. Reaction temperatures may vary and are generally from room temperature to reflux. Reaction times may also vary and are generally from 1 - 48 hrs. The thus obtained activated gallic acid is used in Step iii.

Step iii: Modified gallic acid of step ii), amino functionalised silica nanoparticles, are combined in an organic solvent, such as an aromatic solvent, e.g. toluene. Reaction temperatures may vary and are generally from room temperature to reflux. Reaction times may also vary and are generally from 1 - 48 hrs. The thus obtained modified silica nanoparticles are optionally washed and /or dried, preferably are washed and dried. In an advantageous embodiment, step iii) is performed under water - free conditions. Water free conditions are believed to avoid formation of stable GA radicals on the nanoparticles obtained.

In a further embodiment, the nanoparticles initially obtained as described above are further modified. Such modification may comprise the step of forming aggregates or agglomerates of the nanoparticles initially obtained.

In a **fourth aspect,** the invention relates to a method for manufacturing an article as defined herein. This method comprises the steps of combining an effective amount of nanoparticles as described herein with an article to obtain a modified article, being particularly stable towards oxidation. The inventive particles may be processes in the same manner as conventional particles.

For example, Shaped articles or pharmaceutical products (if in solid form) may be coated with a formulation to obtain such modified articles.

Further, food products, cosmetic products and pharmaceutical products (if in liquid or solid form) may be mixed with the inventive particles or with formulations of inventive particles to obtain such modified articles.

The amount of inventive nanoparticles may vary over a broad range and may be determined by routine experiments. Typically, the amount required is not more than pure gallic acid to be used.

In a **fifth aspect,** the invention relates to the use of nanoparticles and articles as defined herein.

This aspect of the invention shall be explained in further detail below.

In one embodiment, the invention provides for the use of nanoparticles, as described herein, as an antioxidant. By providing the inventive nanoparticles, it is possible to provide gallic acid in a stabilized form. Articles, comprising an effective amount of the inventive nanoparticles are thus stabilized towards oxidation and show improved aesthetic properties and or improved sensory properties.

In one further embodiment, the invention provides for the use of nanoparticles, as described herein, for providing an immobilized gallic acid.

In one further embodiment, the invention provides for the use of silica nanoparticles, including pure silica nanoparticles, doped silica nanoparticles and core shell silica nanoparticles having a shell of pure or doped silia, as a solid substrate for gallic acid.

To further illustrate the invention, the following **examples** are provided. These examples are provided with no intend to limit the scope of the invention.

### 1. Manufacturing of Nanoparticles

### 1.1 Chemicals

All aqueous solutions were prepared in Milli-Q water produced by a Millipore Academic System. 3-Aminopropyltriethoxysilane (APTES, >98%), Gallic Acid monohydrate [purum >98%] and *N*-(3-dimethylaminopropyl)-*N*'-ethylcarbodiimide hydrochloride (EDC) [purum >98%], and ultrapure Methanol [puriss, absolute, over molecular sieve (H₂O ≤0.01%), ≥99.5% (GC)] were obtained from Sigma-Aldrich. 2,2-Diphenyl-1-picrylhydrazyl radical (DPPH·) was obtained from Sigma-Aldrich and used fresh i.e. within one month from its purchase.

### SiO₂ NPs

Four well-characterized commercially available, hydrophilic SiO₂ NPs were used (herein called according to the code of the provider i.e. Aerosil A90, A150 and A300, A380 Evonik). Their SSA, m² g⁻¹ determined by N₂ (PanGas, 9.9999%) adsorption at -196 °C (Micromeritics, Tristar 3000) is listed in Table 1. The SiO₂ NPs had an average OH-surface density of 2.6-2.8 OH/nm²

**Table 1: SSA and GA-loading for the SiO₂-GA NPs.**

| Material | SSA [m²/gr] | Particle diameter d*_{BET}*[nm] | GA [% w:w] | Surface Conc. of GA [µM/gram] | Surface Density of GA [GA per nm²][b] |
|---|---|---|---|---|---|
| SiO₂[90]-GA | 96 | 30.3 | 1.7±0.2 | 100 ±11 | 1.0±0.1 |
| SiO₂[150]-GA | 129 | 21.1 | 2.6±0.2 | 152 ±12 | 1.2±0.1 |
| SiO₂[300]-GA | 269 | 10.1 | 4.4±0.3 | 259 ±18 | 1.0 ±0.1 |
| SiO₂[380]-GA | 352 | 7.6 | 6.0±0.3 | 366 ±19 | 1.0±0.1 |

| | | | | | |
|---|---|---|---|---|---|
| [a]: estimated by the SSA using the relationship d_{BET} [nm] =6000/(2.2 [gr/cm³]xSSA [m²/gr]); [b] estimated by dividing the GA-loading [µM/gram] per SSA [m²/gr]. | | | | | |

### 1.2 Preparation of Functionalized SiO₂-GA NPs

Before functionalization, all SiO₂ NPs were dried at 140 °C for 12 h. Aminopropyl-SiO₂ (APTES-SiO₂) was prepared by reacting 5 gr of dry SiO₂ with 5 ml of APTES in 50 ml toluene. The suspension was refluxed for 24 h at 80 °C, then each material was rinsed three times with toluene, ethanol(x3) and acetone (x3), dried for 18 h at 80 °C in a Buchi (B-585) rotating furnace-drier. The obtained NPs were aminopropyl-SiO₂ herein named SiO₂-NH₂ for brevity. Then, covalent immobilization of GA on them achieved by formation of amide bonds between the amine groups of SiO₂-NH₂ and the carboxyl group of GA activated by the EDC coupler. One gram of SiO₂-NH₂ was suspended in 50 ml of toluene, then GA and EDC were added in the suspension. For all materials a [GA:EDC] mass ratio [3:1] was used e.g. 300 mg GA and 100 mg EDC per gram of SiO₂-NH₂. The mixture was refluxed for 18 h at 80 °C. Then the solid was centrifuged in a ROTINA Hettich 6000 rpm, 5 minutes at 25 °C and rinsed three times with toluene, methanol [x3] and acetone [x3] and dried at 80 °C for 12 h. Here the protocol did not involve washing in aqueous solution in the final step, to avoid formation of stable GA radicals on the SiO₂-GA NPs.

### 1.3 Particle Characterization

The so-prepared hybrid SiO₂-GA NPs were characterized by high resolution transmission electron microscopy (HR-TEM) on a Tecnai F30 ST. The SSA was obtained according to Brunauer-Emmet-Teller (BET) by five-point N₂ adsorption at 77 K (Micromeritics Tristar 3000). Prior to that, samples were degassed in N₂ for at least 1 h at 150 °C. The organic loading in hybrid NPs was measured by thermogravimetric (TGA) analysis performed using a Schimadzu DTG-60 analyzer. FTIR measurements were performed in KBr pellets using a PerkinElmer 580 spectrophotometer. Dynamic Light Scattering (DLS), Malvern Zetasizer, model Nano ZS, measurements were performed in DTS1060 folded capillary cells. The conditions of DLS experiments (concentrations of NPs and DPPH) were similar to these used for the kinetic study described in Table 2.

**Tab.2: Surface Conc. and Density of GA Radicals estimated by EPR.**

| Material | Surface Concentration of GA Radicals [µM/gram] | Surface Density of GA Radicals [Radicals per nm²] |
|---|---|---|
| SiO₂[90]-GA | 101 ±5 | 1.0±0.1 |
| SiO₂[150]-GA | 148 ±5 | 1.1±0.1 |
| SiO₂[300]-GA | 251 ±5 | 1.0±0.1 |
| SiO₂[380]-GA | 357 ±5 | 1.0±0.1 |

To measure the aggregation of NPs due to the interaction with the DPPH radicals, the NPs suspension was allowed to react with DPPH for 60 minutes and then introduced into the DLS cell. Electron Paramagnetic Resonance (EPR) spectra were recorded with a Bruker ER200D spectrometer at 77K (in liquid-N₂), equipped with an Agilent 5310A frequency counter. Adequate signal-to-noise was obtained after 5-10 scans. Spin quantitation was done using DPPH as spin standard. Herein, EPR spectroscopy was used as a state-of the art tool with a double purpose: [i] to determine the maximum concentration of GA molecules able to form radicals on each type of the SiO₂-nanomaterial. This was done by oxidation of GA by O₂ in aqeous solution at alkaline pH. [ii] to monitor the radical reactions e.g. between DPPH and SiO₂-GA. For each SiO₂-material, the reaction mixture consisted of SiO₂-GA nanoparticle suspension in methanol plus DPPH inside the EPR tube, [Willmad Glass Suprasil, 5.5 mm outer diameter]. The initial concentrations [DPPH:GA]₀ were similar to those used for the kinetic UV-Vis experiments. To monitor the time evolution of the DPPH radical scavenging, the reaction was quenched at selected times between 0 and 60 minutes, by rapid freezing [within 10 seconds] the sample at 77 K. The EPR signals for DPPH:SiO₂-GA were recorded at non-saturating microwave power 0.125 mW with a modulation amplitude of 2 Gpp. For comparison, similar experiments were also run for DPPH:GA.

### 2. Evaluation of Nanoparticles

The nanoparticles according to # 1 are evaluated in the following tests:

### 2.1 Chemical stability

3g of nanoparticles according to #1 are suspended in 3 ml aqueous solution @ ph 5.0, 7.1, 8.2, 12.0 and stirred for 10 hrs / 26°C. The supernatant was removed and the amount of gallic acid was determined bat 254 nm.

For suspensions of pH 5.0, 7.1 and 8.2, a leaching of less than 0.5% was determined.

For suspensions of pH 12.0, a leaching of less than 0.5% was determined.

### 2.2 Antioxidant, Antiradical stability

The Radical Scavenging capacity (RSC) is determined according to the standardised DPPH Method using EPR spectroscopy and UV-VIS spectroscopy. Key findings are:
■ The nanoparticles according to #1 scavenge up to 4 DPPH radicals per GA molecule grafted on the core surface.
■ The nanoparticles according to #1 can perform rapid H atom transfer (HAT) reactions with kinectic times below 1 minute.
■ The nanoparticles according to #1 can be reused after their interaction with DPPH radicals, by a simple washing step, with no impairment of their RSC.
■ The nanoparticles according to #1 retain more than 90% of their RSC after treatment up to 150°C/40 min. Pure gallic acid retains less than 60% of their RSC after similar treatment.

## Claims

1. A Nanoparticle comprising a core and a coating, **characterized in that**
(a) said coating comprises gallic acid and
(b) said core comprises silica.

2. The nanoparticle of claim 1, **characterized in that** said coating comprises gallic acid which is covalently bond to said core.

3. The nanoparticle of claim 1, **characterized in that** said coating comprises Gallic Acid which is covalently bond to said core via its carboxylic group by a linker.

4. The nanoparticle of claim 3, **characterized in that** said coating comprises structures of formula (Ia) 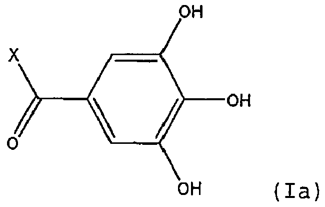 wherein X refers to a fragment that allows covalent bonding between gallic acid and the surface of the nanoparticle.

5. The nanoparticle of claim 4, wherein X represents a group selected from (IIa), (IIb) or (IIc) 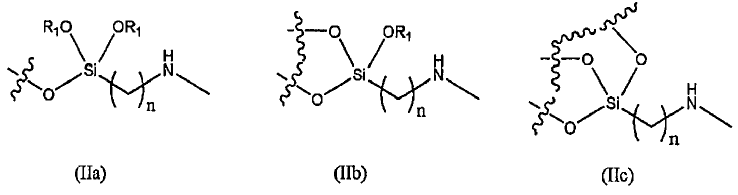 wherein
R¹ represents hydrogen or C₁-C₄ alkyl;
n represents an integer from 0-10; and
the sinuous line represents the nanoparticles core.

6. The nanoparticle of claim 1, **characterized in that** said core comprises
(a) pure silica
(b) silica doped with a dopant, said dopant preferably being selected from the group consisting of Aluminuim
(c) an inner core of a material different from silica and an outer core of pure silica or doped silica according to (a) or (b).

7. The nanoparticle of claim 1, **characterized in that**
■ said core has a size in the range of 1-100 nm primary particle diameter and/or
■ said nanoparticle is 10-10 000 nm in aggregate or agglomerate diameter.

8. An article, comprising nanoparticles according to any of claims 1 - 7.

9. The article of claim 8, said article being selected from the group of shaped articles; food products; pharmaceutical products and cosmetic products.

10. The article according to any of claims 8 or 9, **characterized in that** (a) said nanoparticles are coated on top of said article and /or (b) said nanoparticles are embedded within said article.

11. A method for manufacturing nanoparticles according to any of claims 1 - 7, comprising the steps of:
■ providing silica nanoparticles
■ modifying said silica nanoparticles
■ coupling gallic acid with said modified nanoparticles;
or comprising the steps of:
■ providing gallic acid
■ modifying said gallic acid
■ coupling said modified gallic acid with silica nanoparticles.

12. The method of claim 11, further comprising the step of forming aggregates or agglomerates of the nanoparticles initially obtained.

13. A method for manufacturing an article according to any of claims 8 - 10, comprising the step of embedding said nanoparticles in said article or coating said nanoparticles on top of said article.

14. Use of nanoparticles according to any of claims 1 - 7 as an antioxidant.

15. Use of nanoparticles according to any of claims 1 - 7 for providing an immobilized gallic acid.
